# EUROPÄISCHE PATENTANMELDUNG

(11) **EP 3 311 975 A1**
(43) Veröffentlichungstag der Anmeldung: **25.04.2018**
(21) Anmeldenummer: 17001303.1
(22) Anmeldetag: 28.07.2017
(51) Int. Cl.: B29C 47/08, B29C 47/60, B29B 7/80

(54) **SCHNECKE ZUM EINSATZ IN EINEM EXTRUDER UND EXTRUDER**

(30) Priorität: 18.10.2016 DE 102016012478
(71) Anmelder: Reifenhäuser GmbH & Co. KG Maschinenfabrik, 53844 Troisdorf (DE)
(72) Erfinder: SZURGOT, Mateusz, 50677 Köln (DE); MATHY, Torsten, 51143 Köln (DE)
(74) Vertreter: Farago-Schauer, Peter Andreas

(57) **Zusammenfassung**

Die Erfindung betrifft eine Schnecke zum Einsatz in einem Extruder und einen Extruder in dem eine hier vorgeschlagene Schnecke zum Einsatz kommt. Die Schnecke ist modular aufgebaut, so dass sie sehr flexibel an veränderte Aufgabenstellungen und Randbedingungen angepasst werden kann. Die modulare Bauweise einer Schnecke fuhrt zu einem stabförmigen Dorn (11,12,21,22,2,3,41) und einzelnen Schneckenelementen, die auf den Dorn (11,12,21,22,2,3,41) aufgeschoben werden. Die Elemente erfüllen die klassischen Funktionen der Schnecke im Extrusionsprozess wie beispielsweise das Fördern, Kneten, Mischen oder Scheren des ein- und durchzuführenden Kunststoffs. Zum Übertragen des hohen auftretenden Drehmoments werden die Elemente mit dem Dorn (21,2,41,42) formschlüssig verbunden und zusätzlich axial verspannt. Dabei ist die Verbindung so auszuführen, dass ein Lösen der Verbindung mit einfachen Mitteln möglich ist. Die Erfindung betrifft diverse Aspekte, mit denen eine vorteilhafte formschlüssige Verbindung zwischen Schnecke und Dorn (11,12,21,22,2,3,41) ausgeführt werden kann.

## Beschreibung

Die Erfindung betrifft eine Schnecke zum Einsatz in einem Extruder sowie einen Extruder mit einer solchen Schnecke. Insbesondere betrifft die Erfindung eine Schnecke zum Einsatz in einem Mehrschneckenextruder sowie einen Mehrschneckenextruder, wobei die Schnecke einen Dorn und ein auf dem Dorn getragenes Segment der Schnecke aufweist.

Üblicherweise werden Schnecken modular aufgebaut. Sie können dadurch sehr flexibel an veränderte Aufgabenstellungen und Produkteigenschaften angepasst werden. Die modulare Bauweise einer Schnecke führt zu einem stabförmigen Kern, dem sogenannten Dorn, in der Praxis wird der Dorn oft ebenfalls Welle oder Tragwelle genannt, und aus einzelnen Schneckenelementen, die auf den Dorn aufgeschoben werden. Die Elemente erfüllen die klassischen Funktionen der Schnecke im Extrusionsprozess wie beispielsweise das Fördern, Kneten, Mischen oder Scheren des ein- und durchzuführenden Kunststoffs.

Zum Übertragen des hohen auftretenden Drehmoments werden die Elemente mit dem Dorn formschlüssig verbunden und zusätzlich axial verspannt. Die Verbindung ist so auszuführen, dass ein Lösen der Verbindung mit einfachen Mitteln möglich ist.

Das Ziel der Auslegung einer Welle-Nabe-Verbindung ist die sichere Übertragung größtmöglicher Drehmomente zwischen Welle und Nabe. Eine formschlüssige Welle-Nabe-Verbindung besitzt zur Kraftübertragung Flanken, wodurch sie von der idealen Geometrie zum Transfer von Drehmomenten, einem Rundstab, abweicht.

Zur formschlüssigen Übertragung der Drehmomente muss ein Rundstab geometrisch so umgestaltet werden, dass er einerseits nicht zu hohe Flächenpressungen an der Flanke erfährt und andererseits diese Flanke den Rundstab durch auftretende Kerbwirkung nicht unverhältnismäßig schwächt. Diese Forderungen stehen im Widerspruch zueinander.

Die DE 90 10 606 U1 beschreibt eine Einsteckeinrichtung für eine erste Welle mit einem Schaft, an dessen einem Ende ein Einsteckabschnitt vorgesehen ist, mit auf der Außenfläche verlaufenden, gleichmäßigen am Umfang verteilten, abwechselnd konvexen und konkaven, ineinander übergehenden Erhöhungen und Vertiefungen, der zum Einstecken in eine hohlzylindrische Aufnahmeöffnung einer zweiten Welle dient, auf deren Innenoberfläche parallel zur Längsachse der zweiten Welle verlaufende, gleichmäßig am Umfang verteilte, abwechselnd konkave und konvexe, ineinander übergehende Erhöhungen und Vertiefungen ausgebildet sind.

Aus der DE 38 13 272 C2 ist eine Zahnwellenverbindung zum starren Verbinden eines Rotors mit einer Welle bekannt.

Die WO 87/01165 A1 offenbart eine Gelenkverbindung, die aus einem ersten Treib-Element am Ende einer ersten drehbaren Welle und einem zweiten Treib-Element am Ende einer zweiten drehbaren Welle besteht, deren Treib-Elemente verschwenkbar miteinander in Eingriff stehen.

Die EP 0 767 325 A2 beschreibt ein Wellengetriebe zum Übertragen eines Drehmomentes über eine Zahnwellenverbindung.

Die DE 103 30 530 A1 beschreibt eine Zahnwellenverbindung auf welche eine Hülse aufgeschweißt wird. Der Schneckenschaft ist mit einer Außenverzahnung versehen, auf die die eine entsprechende Innenverzahnung aufweisende Schneckenelemente aufgefädelt werden. Die Segmente werden bis zum Anschlag an der Hülse aufgefädelt.

Die DE 196 21 571 C2 und die DE 10 2004 042 746 B4 offenbaren Zahnwellenverbindungen zwischen den Segmenten der Schnecke eines Extruders und dem Dorn des Extruders.

Die DE 10 2004 056 642 A1 offenbart eine formschlüssige Welle-Nabe-Verbindung, wobei die Kontur der Welle-Nabe-Verbindung mittels Epitrochoiden abbildbar ist.

Die DE 10 2006 029 471 A1 und die DE 10 2011 112 148 A1 beschreiben eine Keilwellenverbindung zwischen den Segmenten der Schnecke eines Extruders und dem Dorn des Extruders.

Der Erfindung liegt die Aufgabe zugrunde, dem Stand der Technik eine Verbesserung oder eine Alternative zur Verfügung zu stellen.

Nach einem ersten Aspekt der Erfindung löst die Aufgabe eine Schnecke zum Einsatz in einem Extruder, wobei die Schnecke einen Dorn und ein auf dem Dorn getragenes Segment aufweist, wobei das Segment und der Dorn eine zyklisch asymmetrische Profilwellenverbindung aufweisen.

### Begrifflich sei hierzu Folgendes erläutert:

Zunächst sei ausdrücklich darauf hingewiesen, dass im Rahmen der hier vorliegenden Patentanmeldung unbestimmte Artikel und Zahlenangaben wie "ein", "zwei" usw. im Regelfall als "mindestens"-Angaben zu verstehen sein sollen, also als "mindestens ein...", "mindestens zwei ..." usw., sofern sich nicht aus dem jeweiligen Kontext ausdrücklich ergibt oder es für den Fachmann offensichtlich oder technisch zwingend ist, dass dort nur "genau ein ...", "genau zwei ..." usw. gemeint sein können.

Der "Dorn" sei in axialer Erstreckung verstanden jedenfalls vom Ende des ersten Segments bis zum Beginn des letzten Segments. Das Eintragen des Moments in die Schnecke ist sowohl über den Dorn möglich - für diesen Fall ist eine tangentiale Fixierung zwischen dem Getriebeabtrieb und dem Dorn erforderlich -, und über eine momentenübertragende Verbindung des Getriebeabtriebs mit mindestens einem Segment, bevorzugt mit dem axial ersten Segment.

Die "Segmente" sind diejenigen Bauelemente der Schnecke, welche zusammen den schneckenförmigen Gang bzw. die Mehrzahl an schneckenförmigen Gängen zum Plastifizieren des durch den Extruder zu führenden Kunststoffs in Zusammenwirkung mit dem Gehäuse/Zylinder des Extruders bewirken und/oder ein Knetelement und/oder ein Förderelement bilden.

Jeweils zwei axial benachbarte Segmente stoßen unmittelbar - im Falle von direkt benachbarten Segmenten - oder mittelbar - bei einem oder mehreren dazwischen liegenden Segmenten - an ihren Segmentengrenzen axial aneinander. Der sich dazwischen einstellende Schlitz, im einfachsten Fall also ein Kreisring, muss gegen den Durchtritt von Kunststoffschmelze nach innen, somit zum Dorn hin, abgedichtet werden. Die Segmente werden dazu üblicherweise axial verspannt. Die Normalkraft führt zu einer ausreichenden Abdichtung mittels Flächenpressung.

Denkbar ist jedoch ebenfalls eine Schnecke, die nur aus einem Segment und einem Dorn besteht. In diesem Fall meint ein Segment das Bauteil der Schnecke, welches den schneckenförmigen Gang bzw. die Mehrzahl an schneckenförmigen Gängen zum Plastifizieren des durch den Extruder zu führenden Kunststoffs in Zusammenwirkung mit dem Gehäuse/Zylinder des Extruders bewirkt und gegebenenfalls ein Knetelement aufweist.

Der Stand der Technik kennt diverse "Profilwellenverbindungen". Profilwellenverbindung sind alle formschlüssigen Verbindungen zwischen Welle und Nabe. Für Profilwellenverbindungen wird ein Wellenquerschnitt meist als symmetrisches Profil mit parallelen Mitnehmern und die Nabe als Gegenstück gestaltet. Durch diese Formgebung kann auf Passfedern oder Keile verzichtet werden. Zu den Profilwellenverbindungen gehören beispielsweise Wellen mit Keilverzahnung, Zahnwellen mit Kerbverzahnung sowie Evolventenverzahnung und Polygonprofilwellenverbindungen, die sich durch eine geringe Kerbwirkung auszeichnen.

Neben den bereits vorgestellten Unterschieden bei den Profilwellenverbindungen können alle vorgestellten Gattungen hinsichtlich der Symmetrie der Ausführung weiter spezifiziert werden. In Frage kommen Spezifizierungen hinsichtlich der Achsensymmetrie, der Punktsymmetrie, der Rotationssymmetrie und der zyklischen Geometrie.

Eine Geometrie heißt "achsensymmetrisch" und weist eine "Achsensymmetrie" auf, wenn sie durch die senkrechte Achsenspiegelung an ihrer Symmetrieachse auf sich selbst abgebildet wird.

Eine Geometrie heißt "punktsymmetrisch" und weist eine "Punktsymmetrie" auf, wenn sie durch die Spiegelung an einem Symmetriepunkt auf sich selbst abgebildet wird.

Eine Geometrie heißt "rotationssymmetrisch" und weist eine "Rotationssymmetrie" auf, wenn eine Drehung um jeden Winkel um einen Punkt oder eine Achse das Objekt auf sich selbst abbildet.

Eine Geometrie heißt "zyklisch symmetrisch" und weist eine "zyklische Symmetrie" auf, wenn es für das Objekt eine Rotationsachse gibt und das Objekt aus einem mehrfach wiederholten Sektor in Bezug auf diese Achse besteht. An der Grenze der Sektoren müssen für beide benachbarten Sektoren gleiche Konturen vorliegen.

Hinsichtlich der zyklisch symmetrischen Objekte kann weiterhin spezifiziert werden in zyklisch symmetrische Objekte, deren Sektorgrenze radial auf einer Gerade oder einem Polygonzug oder auf einer Kurve verläuft.

Zyklisch symmetrische Objekte mit einer radial verlaufenden Sektorengrenze können au-βerdem eine Achssymmetrie und/oder eine Punktsymmetrie aufweisen.

Eine Geometrie heißt "zyklisch asymmetrisch" und weist eine "zyklische Asymmetrie" auf, wenn sie nicht zyklisch symmetrisch ist. Mit einfachen Worten sind alle Geometrien zyklisch asymmetrisch, wenn es für das Objekt eine Rotationsachse gibt und das Objekt nicht aus sich mehrfach wiederholenden Sektoren in Bezug auf diese Achse zusammengesetzt werden kann.

Ein "Schneckensegment" bezeichnet einen zyklisch symmetrischen Abschnitt der Schnecke mit Bezug auf die Achse der Schnecke in einem Querschnitt der Schnecke, der normal zur Achse der Schnecke verläuft.

Die Begrifflichkeit der zyklischen Symmetrie wird im Kontext dieser Erfindung lokal verstanden und kann sich sowohl auf die Symmetrie der Welle-Nabe Verbindung also der Profilwellenverbindung zwischen Dorn und Segment als auch mit einem gegebenenfalls abweichenden Charakter auf die Symmetrie der Schneckensegmente beziehen. Die Schneckengeometrie umfasst beispielsweise die Anzahl der Schneckengänge, die Formgebung der Knetelemente und weitere Aspekte, die gemeinsam die Geometrie der Schneckensegmente beeinflussen.

Die Schneckengeometrie weist in aller Regel eine zyklisch symmetrische Gestaltung auf. So ist also konkret denkbar, dass die Schneckensegmente eine zyklische Symmetrie aufweisen, die Verbindung zwischen Dorn und Segment gleichzeitig aber eine zyklische Asymmetrie der Verbindung zwischen Dorn und Segment aufweist.

Der Stand der Technik sah bislang für die Verbindung eines Dorns mit einem Segment einer Extruderschnecke nur zyklisch symmetrische Profilverbindungen vor.

Abweichend wird hier vorgeschlagen, zyklisch asymmetrische Profilverbindungen zu verwenden.

Damit wird bei geeigneter Gestaltung erreicht, dass die Segmente nur noch in einer stärker begrenzten Anzahl von Umfangspositionen auf dem Dorn montiert werden können.

Beispielsweise ist denkbar, dass ein Segment nur noch in einer, in zwei oder in drei usw. vorgegebenen Umfangspositionen auf den Dorn geschoben werden kann. So kann sichergestellt werden, dass die Segmente einer Schnecke nur in der gewünschten Umfangsposition benachbart werden können. Diese bevorzugten Montagepositionen können sich beispielsweise an der Gangzahl der Schnecke orientieren und sind besonders bevorzugt bei Profilwellenverbindungen mit einer hohen Anzahl an sonst zyklisch symmetrischen Formschlusselementen.

Konkret ist so beispielsweise denkbar, die ansonsten zyklisch symmetrische Ausführung einer Polygonwellenverbindung, einer Keilwellenverbindung oder einer Zahnwellenverbindung dadurch zu unterbrechen, dass ein Sektor der Profilwellenverbindung abweichend zu den anderen Sektoren mit einer anderen Geometrie ausgeführt wird, so dass eine zyklisch asymmetrische Verbindung zwischen dem Dorn und den Segmenten entsteht.

Eine andere Ausführungsform sieht vor, die zyklische Asymmetrie der Verbindung zwischen Dorn und Segment an den Symmetrieeigenschaften der Schnecke derart auszurichten, dass es genauso viele Montagekombinationen zwischen Segment und Dorn gibt, wie es zyklisch symmetrische Schneckensegmente gibt und die Symmetrie zwischen Dorn und Segment so zur Symmetrie des Schneckensegmentes abgestimmt ist, dass keine Funktionseigenschaften der Extruderschnecke durch eine fehlerhafte Zuordnung des Montagewinkels zwischen Schnecke und Dorn gefährdet werden können.

Vorteilhaft kann hierdurch also erreicht werden, dass die Gestaltung der Profilwellenverbindung zwischen Dorn und Segment eine fehlerhafte Montage verhindert.

Außerdem kann vorteilhaft erreicht werden, dass benachbarte Segmente nur so zusammengesetzt werden können, dass ihre individuelle Abstimmung aufeinander anhand der gewünschten Funktionseigenschaften der Extruderschnecke miteinander korrespondieren, wodurch ebenfalls sichergestellt werden kann, dass eine fehlerhafte Montage mehrerer aufeinanderfolgender benachbarter Segmente ausgeschlossen ist.

Optional weist die Profilwellenverbindung ein ganzzahliges Vielfaches an lokalen Maxima des Radius' der Verbindung zwischen Dorn und Schnecke gegenüber den zyklisch symmetrischen Schneckensegmenten auf.

### Begrifflich sei hierzu Folgendes erläutert:

Ein "lokales Maximum" ist so zu verstehen, dass der Radius der Kontur der Profilwellenverbindung an der Stelle des lokalen Maximums des Radius' eine lokalen maximalen Wert erreicht und der Verlauf des Radius in der Umgebung des lokalen Maximums des Radius' keine größeren Werte des Radius' annimmt. Das Gegenteil des lokalen Maximums ist das "lokale Minimum".

Vorteilhaft kann hierdurch erreicht werden, dass es mehrere passende Umfangswinkelkombinationen von Dorn und Segment geben kann, die bei geeigneter Ausführung sicherstellen, dass die individuelle Abstimmung benachbarter Segmente oder von Funktionalitäten zwischen der Extruderschnecke und dem Gehäuse des Extruders immer fehlerfrei berücksichtigt wird.

Bevorzugt weist die Profilwellenverbindung eine Kontur mit zwei Profilflanken auf, wobei die Extruderschnecke eine konstruktionsbedingte Drehrichtung aufweist, wobei eine Profilflanke, insbesondere diejenige Profilflanke des Dorns, die dem Segment in Drehrichtung zugewandt ist, in radialer Richtung steiler ausgeführt ist als die andere Profilflanke.

### Begrifflich sei hierzu Folgendes erläutert:

Eine "Profilflanke" bezeichnet die Verbindung auf der Kontur der Profilwellenverbindung zwischen einem lokalen Minimum und einem lokalen Maximum des Radius' der Kontur der Profilwellenverbindung.

Eine "konstruktionsbedingte Drehrichtung" ist diejenige Drehrichtung der Schnecke, welche die Schnecke im Normalbetrieb des Extruders aufweist und bei welcher das zu verarbeitende Materials von der Einfüllöffnung zum Austritt des Extruders gefördert wird.

Vorteilhaft kann hierdurch erreicht werden, dass die auf den Dorn wirkenden Radialkräfte reduziert werden können. Die Profilflanke des Dorns, die dem Segment in Drehrichtung zugewandt ist, übernimmt die Aufgabe das von dem Extruderantrieb aufgebrachte Drehmoment von dem Dorn in die Schnecke einzubringen. Der Dorn soll bei der Übertragung des Drehmomentes möglichst nicht durch zusätzliche Kräfte in radialer Richtung des Dorns belastet werden. Je steiler die Profilflanke des Dorns, die dem Segment in Drehrichtung zugewandt ist, ausgeführt ist, desto weniger Radialkräfte werden in den Dorn eingebracht, desto größer werden die wünschenswerten Tangentialkräfte und die Effizienz der Übertragung des Drehmomentes kann gesteigert werden.

Die Profilflanke des Dorns, die dem Segment in Drehrichtung zugewandt ist, ist vorteilhafterweise flach ausgeführt. Auf diese Weise können die Kräfte von der Profilflanke, die das Drehmoment des Dorns auf das Segment überträgt, besser und mit geringerem Kerbeinfluss in den Dorn eingeleitet werden.

Nach einem zweiten Aspekt der Erfindung löst die Aufgabe eine Schnecke zum Einsatz in einem Extruder, wobei die Schnecke einen Dorn und ein auf dem Dorn getragenes Segment aufweist, wobei das Segment und der Dorn eine Profilwellenverbindung aufweisen, wobei die Profilwellenverbindung eine Polygonprofilwellenverbindung mit gekrümmten Flanken ist.

### Begrifflich sei hierzu Folgendes erläutert:

Eine "Polygonprofilwellenverbindungen" beschreibt eine Profilwellenverbindung, welche durch ihre charakteristische Polygonform beschrieben und den sogenannten Unrundverbindungen zugeteilt wird. Sie gehören zu den lösbaren und axial verschiebbaren Verbindungen. Nach DIN 32711 werden verschiedene Formen der Verbindung und deren Abmessungen von den entsprechenden "Polygonwellen" kategorisiert. Diese Einordnung ist jedoch nicht zwingend abschließend und es können weitere andere Ausführungsformen von Polygonwellen unter diese Begrifflichkeit fallen, insbesondere bei diesem Aspekt der Erfindung.

Eine "Flanke" bezeichnet die Verbindung auf der Kontur der Polygonwellenverbindung zwischen den Punkten des Polygons.

Unter "gekrümmten Flanken" ist zu verstehen, dass die Flanken, keine geraden Verbindungen sind, sondern durch Kurven beschrieben werden, wobei gekrümmte Flanken Kurven aufweisen, welche auf mindestens 75 % ihrer Länge gekrümmt sind.

Der Stand der Technik sah bislang keine Polygonwellenverbindungen für die Profilwellenverbindung von Dorn und Segment einer Extruderschnecke vor.

Abweichend werden solche hier vorgeschlagen.

Vorteilhaft kann hierdurch erreicht werden, dass die Polygonwellenverbindung sehr hohe Drehmomente übertragen kann, insbesondere hohe Drehmomente mit einer hohen zeitlichen Dynamik.

Außerdem kann eine Polygonwellenverbindung sehr einfach montiert werden und weist durch ihre Formgebung eine sehr geringe Kerbwirkung auf, wodurch die Materialausnutzung gesteigert werden kann.

Insgesamt kann eine Polygonwellenverbindung sehr effizient Drehmomente übertragen und führt mit ihrer einfachen Montage zu einer Ausgestaltung einer Welle-Nabe Verbindung für eine Extruderschnecke.

Es sei ausdrücklich darauf hingewiesen, dass der Gegenstand des zweiten Aspektes mit dem Gegenstand des ersten Aspektes der Erfindung vorteilhaft kombinierbar ist.

Bevorzugt ist eine Flanke in Richtung des Segments konvex gekrümmt.

Vorteilhaft kann hierdurch erreicht werden, dass die Kerbwirkung der Polygonwellenverbindung reduziert werden kann.

Optional ist eine Flanke in Richtung des Segments konkav gekrümmt.

Vorteilhaft kann hierdurch erreicht werden, dass die Drehmomente an steileren Flanken übertragen werden können, wodurch geringere radiale Kräfte auf die Polygonwellenverbindung wirken und die Effizienz der Übertragung des Drehmomentes erhöht werden kann.

Bevorzugt weist der Dorn eine Polygonkontur auf, wobei die Polygonkontur harmonisch ist.

### Begrifflich sei hierzu Folgendes erläutert:

Alle Gattungen von Profilverbindungen, insbesondere auch die in den anderen Aspekten vorgeschlagenen Profilwellenverbindungen, können in Profilverbindungen mit harmonischen und disharmonischen Profilen unterschieden werden.

Eine Profilverbindung weist eine "harmonische Kontur" auf, wenn die Kontur an jeder Stelle stetig und differenzierbar ist.

Eine Profilverbindung weist eine "disharmonische Kontur" auf, wenn die Kontur an jeder Stelle stetig und nicht differenzierbar ist.

Vorteilhaft kann hierdurch erreicht werden, dass durch die gerundeten Kanten auf dem vollständigen Umfang der Polygonwellenverbindung die Kerbwirkung weiter reduziert werden kann, wodurch die Materialauslastung gesteigert werden kann.

Optional weist der Dorn eine Polygonkontur auf, wobei die Polygonkontur disharmonisch ist.

Vorteilhaft kann hierdurch erreicht werden, dass je nach Ausführung der Disharmonie die Montage erleichtert werden kann, die Zuordnung des Umfangswinkels zwischen Dorn, Kerbwirkungen lokal reduziert werden können und Segment eindeutig vorgegeben werden kann und die Effizienz der Übertragung des Drehmomentes gesteigert werden kann.

Nach einem dritten Aspekt der Erfindung löst die Aufgabe eine Schnecke zum Einsatz in einem Extruder, wobei die Schnecke einen Dorn und ein auf dem Dorn getragenes Segment aufweist, wobei das Segment und der Dorn eine Profilwellenverbindung aufweisen, wobei die Profilwellenverbindung eine Keilwellenverbindung ist.

### Begrifflich sei hierzu Folgendes erläutert:

Eine "Keilwellenverbindung" beschreibt eine Profilwellenverbindung, welche einen Formschluss zur Nabe durch eine Vielzahl von Mitnehmern herstellt, die gerade und parallele flanken haben. Nach DIN 5464, DIN 5471, DIN 5472 und DIN ISO 14 werden verschiedene Formen der Verbindung und deren Abmessungen kategorisiert. Diese Einordnung ist jedoch nicht zwingend abschließend und es können weitere andere Ausführungsformen von Keilwellen unter diese Begrifflichkeit fallen, insbesondere bei diesem Aspekt der Erfindung. Die entsprechend ausgeführte Welle-Nabe-Verbindung ist eine "Keilwellenverbindung".

Der Stand der Technik sah bislang keine Keilwellenverbindungen für die Profilwellenverbindung von Dorn und Segment einer Extruderschnecke vor.

### Abweichend wird diese hier vorgeschlagen.

Vorteilhaft kann hierdurch erreicht werden, dass eine sehr kostengünstige Profilwellenverbindung zum Einsatz kommen kann, die bereits in einer Vielzahl anderer Anwendungen eingesetzt wird. Dadurch gibt es sehr viele Erfahrungen hinsichtlich der Übertragung eines Drehmomentes mit einer Keilwellenverbindung, welche bei der Ausgestaltung genutzt werden können und welche zu einer insgesamt besseren Welle-Nabe-Verbindung führen können.

Außerdem gibt es für Fertigung von Keilwellenverbindungen standardisierte Werkzeuge, so dass die Fertigung vergleichsweise preisgünstig sein kann.

Weiterhin können die parallelen und sehr steilen Flanken einer Keilwellenverbindung dazu beitragen Drehmomente sehr effizient zu übertragen, also ohne hohe Radialkräfte in der Verbindung, wodurch eine sehr gute Materialausnutzung erreicht werden kann.

Es sei ausdrücklich darauf hingewiesen, dass der Gegenstand des dritten Aspektes mit dem Gegenstand der vorstehenden Aspekte der Erfindung vorteilhaft kombinierbar ist, und zwar einzeln oder in beliebiger Kombination kumulativ.

Nach einem vierten Aspekt der Erfindung löst die Aufgabe eine Schnecke zum Einsatz in einem Extruder, wobei die Schnecke einen Dorn und ein auf dem Dorn getragenes Segment aufweist, wobei das Segment und der Dorn eine Profilwellenverbindung aufweisen, wobei die Profilwellenverbindung in Form einer achsasymmetrischen Zahnwellenverbindung mit einem Zahn ausgeführt ist, wobei der Zahn eine rechte und eine linke Zahnflanke aufweist, wobei die Zahnflanken eine Krümmung aufweisen.

### Begrifflich sei hierzu Folgendes erläutert:

Eine "Zahnwellenverbindung" beschreibt eine Profilwellenverbindung, welche einen Formschluss zur Nabe durch eine Vielzahl von Zähnen herstellt. Unterschieden wird zwischen Verzahnungen mit einer ebenen Zahnflanke, insbesondere einer Zahnflanke mit konstanten Eingriffswinkel der Zähne, und Verzahnungen mit einer gekrümmten Zahnflanke, insbesondere eine mit Evolventenverzahnung. Nach DIN 5480 werden verschiedene Formen der Verbindung und deren Abmessungen kategorisiert. Diese Einordnung ist jedoch nicht zwingend abschließend und es können weitere andere Ausführungsformen von Zahnwellen unter diese Begrifflichkeit fallen, insbesondere bei diesem Aspekt der Erfindung. Die entsprechend ausgeführte Welle-Nabe-Verbindung ist eine "Zahnwellenverbindung".

Eine "Evolventenverzahnung" ist eine Verzahnung mit einer besonderen Form der Evolventenform. Die Evolventenform ergibt sich aus einer Reihe geometrischer Anforderungen an die Zahnflankengeometrie.

Eine "Zahnflanke" ist eine geometrische Verbindungslinie zwischen dem Fußkreis und dem Kopfkreis eines Zahnes.

Ein "Fußkreis" ist derjenige Kreis, auf dem die Verzahnung ihren radial niedrigsten Punkt erreicht. Der zugehörige Durchmesser wird als "Fußkreisdurchmesser" bezeichnet.

Ein "Kopfkreis" ist derjenige Kreis, auf dem die Verzahnung ihren radial höchsten Punkt erreicht. Der zugehörige Durchmesser wird als "Kopfkreisdurchmesser" bezeichnet.

Eine "achsasymmetrische Zahnwellenverbindung" ist eine Zahnwellenverbindung, bei welcher die Zähne keine Achssymmetrie aufweisen. Mit einfachen Worten kann man sagen, dass man eine erste Zahnflanke einer achsasymmetrischen Zahnwellenverbindung nicht durch Spiegelung einer zweiten Flanke an einer Achse erreichen kann.

Der Stand der Technik sah bislang überwiegend vor, dass die Geometrie der Zähne von Zahnwellenverbindungen zwischen Dorn und Segment einer Extruderschnecke achssymmetrisch ausgeführt wurden. So offenbart die DE 196 21 571 C2 eine Zahnwellenverbindung mit achssymmetrischen Zähnen.

Die DE 10 2004 042 746 B4 offenbart eine achsasymmetrische Zahnwellenverbindung zur Verbindung von Dorn und Segment einer Extruderschnecke, wobei die Bereiche der Zahnflanken auf denen sich der Dorn und das Segment berühren eben ausgeführt ist.

Abweichend wird vorgeschlagen die Zahnflanken in dem Kontaktbereich nicht eben sondern kontinuierlich gekrümmt auszuführen.

So ist unter anderem denkbar, dass die Kontur des Dorns innerhalb folgender Randbedingungen derart gestaltet wird, dass die Kerbwirkung reduziert werden kann, eine ausreichend hohe Anzahl an Zähnen verwendet wird so dass die Kraft über den Umfang verteilt und die Flächenpressung reduziert werden kann und die Form der in Drehrichtung dem Segment zugeneigten Flanke so gestaltet wird, dass möglichst keine Radialkräfte und möglichst hohe Tangentialkräfte bei der Übertragung des Drehmomentes entstehen.

Bei einer bevorzugten Gestaltung werden die Zahnflanken aus Zykloiden und/oder Hypozykloiden konstruiert, welche ein sehr gutes Kerbverhalten aufweisen.

In einer weiteren Form der vorteilhaften Gestaltung ist denkbar, dass die Zahnflanke, welche dem Segment in zur Drehrichtung entgegengesetzten Richtung zugewandt ist, entfernt wird und/oder durch eine Kreiskontur ausgestaltet wird.

So ist unter anderem denkbar, dass die Zykloide-Zahnkontur die Zahnwellenverbindung harmonisch über den Umfang profiliert.

Vorteilhaft kann hierdurch erreicht werden, dass die nicht lasttragende Zahnflanke zur Kerbentlastung genutzt wird. Durch den nichtsymmetrischen Aufbau kann die Kerbentlastung noch besser genutzt werden, ohne die Drehmomentübertragung zu beeinträchtigen da ohnehin nur eine Vorzugsrichtung existiert.

Die lasttragende Zahnflanke wird gekrümmt ausgeführt, wodurch bei geeigneter Gestaltung eine Reduzierung der Kerbwirkung am Zahnfuß ermöglicht werden kann.

Die Zahnflanken werden unter anderem asymmetrisch ausgeführt, da im Dorn eine Drehrichtung vorliegt. Diese Übertragungsart hat den Vorteil, dass der maximale Hebelarm zur Übertragung minimaler Kräfte am Umfang genutzt werden kann.

Die Entfernung der nichttragenden Flanke kann das Kerbverhalten im Zahn verbessern. Für die Torsionskräfte kann das Entfernen der nichttragenden Flanke wie eine Entlastungskerbe wirken, wobei Funktionalität nicht beeinträchtigt wird, da eine Vorzugsdrehrichtung vorliegt.

Insgesamt kann die vorgeschlagene Zahnwellenverbindung bei geeigneter Gestaltung dazu beitragen, dass Kerbbelastungen und Radialkräfte im Dorn sowie im Segment reduziert werden, die Materialausnutzung steigt und die Effizienz der Übertragung des Drehmomentes verbessert werden kann.

Es sei ausdrücklich darauf hingewiesen, dass der Gegenstand des vierten Aspektes mit dem Gegenstand der vorstehenden Aspekte der Erfindung vorteilhaft kombinierbar ist, und zwar einzeln oder in beliebiger Kombination kumulativ.

Bevorzugt weist ein Zahnsegment eine Zahnkontur auf, wobei die Zahnkontur harmonisch ist.

Vorteilhaft kann hierdurch erreicht werden, dass durch die gerundeten Kanten auf dem vollständigen Umfang der Polygonwellenverbindung die Kerbwirkung weiter reduziert werden kann, wodurch die Materialauslastung gesteigert werden kann.

Optional weist ein Zahnsegment eine Zahnkontur auf, wobei die Zahnkontur disharmonisch ist.

Vorteilhaft kann hierdurch erreicht werden, dass je nach Ausführung der Disharmonie die Montage erleichtert werden kann, die Zuordnung des Umfangswinkels zwischen Dorn, Kerbwirkungen lokal reduziert werden können und Segment eindeutig vorgegeben werden kann und die Effizienz der Übertragung des Drehmomentes gesteigert werden kann.

Nach einem fünften Aspekt der Erfindung löst die Aufgabe eine Schnecke zum Einsatz in einem Extruder, wobei die Schnecke einen Dorn und ein auf dem Dorn getragenes Segment aufweist, wobei das Segmente und der Dorn mit einer zyklisch symmetrischen Profilwellenverbindung verbunden sind, wobei die Profilwellenverbindung eine achsasymmetrische Zahnwellenverbindung ist, wobei eine Zahnteilung eine Zahnkontur aufweist, wobei die Zahnkontur des Dorns von einem Polynom fünften Grades konturnormal maximal um ein Hundertstel eines Kopfkreisdurchmessers des Dorns abweicht.

### Begrifflich sei hierzu Folgendes erläutert:

Eine "Zahnteilung" ist als ein zyklisch symmetrischer Abschnitt einer zyklisch symmetrischen Zahnwellenverbindung und als der Öffnungswinkel eines zyklisch symmetrischen Zahnsegmentes zu verstehen.

Ein "Zahnsegment" bezeichnet einen zyklisch symmetrischen Abschnitt der Zahnwellenverbindung mit Bezug auf die Achse der Schnecke in einem Querschnitt der Schneck, der normal zur Achse der Schnecke verläuft, insbesondere liegen der linke und der rechte Begrenzungspunkt eines Zahnsegmentes auf dem Kopfkreisdurchmesser.

Unter "konturnormal" wird in Normalenrichtung zur Kontur verstanden.

Eine "Zahnkontur" ist die Kontur eines Zahnsegmentes.

Bei geeigneter Gestaltung der Kontur eines Zahnsegmentes wird diese innerhalb enger Toleranzgrenzen von einem Hundertstel des Kopfkreisdurchmessers durch ein Polynom fünften Grades beschrieben.

Vorteilhaft kann hierdurch erreicht werden, dass die Zahnkontur gut gerundet ist, nur geringe Kerbwirkungen zeigt und somit dazu geeignet ist die Materialausnutzung der Zahnwellenverbindung zu optimieren.

Ausdrücklich sei darauf hingewiesen, dass der vorstehende Werte für die Toleranz nicht als scharfe Grenzen zu verstehen sein soll, sondern vielmehr in ingenieurmäßigem Maßstab über- oder unterschritten werden können soll, ohne den beschriebenen Aspekt der Erfindung zu verlassen. Mit einfachen Worten soll der Werte einen Anhalt für die Größe des hier vorgeschlagenen Toleranzbereiches liefern.

Es sei ausdrücklich darauf hingewiesen, dass der Gegenstand des fünften Aspektes mit dem Gegenstand der vorstehenden Aspekte der Erfindung vorteilhaft kombinierbar ist, und zwar einzeln oder in beliebiger Kombination kumulativ.

Bevorzugt wird ein linker Punkt einer Zahnkontur durch das Polynom beschrieben, wobei der linke Punkt auf dem Kopfkreisdurchmesser des Dorns liegt und der linke Punkt an die linke Flanke eines ersten Zahnes angrenzt.

Bevorzugt wird ein rechter Punkt einer Zahnkontur durch das Polynom beschrieben, wobei der rechte Punkt auf dem Kopfkreisdurchmesser des Dorns liegt und der rechte Punkt an die linke Flanke eines zweiten Zahnes angrenzt.

Bevorzugt wird ein tiefster Punkt einer Zahnkontur durch das Polynom beschrieben, wobei der Punkt auf dem Fußkreisdurchmesser des Dorns liegt und der Punkt in einem Bereich zwischen 55 % bis 90 %, bevorzugt in einem Bereich zwischen 65 % und 83 % und besonders bevorzugt in einem Bereich zwischen 75 % und 79 %, in Umfangsrichtung auf einem Radius zwischen dem Radius des linken Punktes und dem Radius des rechten Punktes liegt.

Ausdrücklich sei darauf hingewiesen, dass die vorstehende Werte für die Position des tiefsten Punktes nicht als scharfe Grenzen zu verstehen sein sollen, sondern vielmehr in ingenieurmäßigem Maßstab über- oder unterschritten werden können sollen, ohne den beschriebenen Aspekt der Erfindung zu verlassen. Mit einfachen Worten sollen die Werte einen Anhalt für die Position des tiefsten Punktes liefern.

Bevorzugt liegt an dem linken Punkt die Steigung des Radius' in Umfangsrichtung in einem Bereich zwischen -0,1 und 0,1, bevorzugt zwischen -0,05 und 0,05 und besonders bevorzugt bei 0.

Ausdrücklich sei daraufhingewiesen, dass die vorstehende Werte für die Steigung an dem linken Punkt nicht als scharfe Grenzen zu verstehen sein sollen, sondern vielmehr in ingenieurmäßigem Maßstab über- oder unterschritten werden können sollen, ohne den beschriebenen Aspekt der Erfindung zu verlassen. Mit einfachen Worten sollen die Werte einen Anhalt für die Steigung des linken Punktes liefern.

Bevorzugt liegt an dem tiefsten Punkt die Steigung des Radius' in Umfangsrichtung bei 0.

Bevorzugt liegt an dem rechten Punkt die Steigung des Radius' in Umfangsrichtung in einem Bereich zwischen 10 und ∞, bevorzugt in einem Bereich zwischen 100 und ∞ und besonders bevorzugt bei ∞.

Ausdrücklich sei daraufhingewiesen, dass die vorstehende Werte für die Steigung an dem rechten Punkt nicht als scharfe Grenzen zu verstehen sein sollen, sondern vielmehr in ingenieurmäßigem Maßstab über- oder unterschritten werden können sollen, ohne den beschriebenen Aspekt der Erfindung zu verlassen. Mit einfachen Worten sollen die Werte einen Anhalt für die Steigung des rechten Punktes liefern.

Nach einem sechsten Aspekt der Erfindung löst die Aufgabe eine Schnecke zum Einsatz in einem Extruder, wobei die Schnecke einen Dorn und ein auf dem Dorn getragenes Segment aufweist, wobei das Segment und der Dorn eine Profilwellenverbindung mit einer disharmonischen Kontur aufweisen, wobei die Profilwellenverbindung eine achsensymmetrische Kontur aufweist, wobei die Kontur des Dorns gegenüber einem sonst zylindrischen Verlauf einer Dornmantelfläche eine konkave Aussparung mit einem harmonischen Verlauf einer Kontur der Aussparung aufweist, wobei die harmonische Kontur der Aussparung durch einen disharmonischen Übergang am Kopfkreis des Dorns mit dem sonst zylindrischen Verlauf der Dornmantelfläche verbunden ist.

### Begrifflich sei hierzu Folgendes erläutert:

Unter einer "Dornmantelfläche" versteht man die Mantelfläche eines zylindrischen Dorns, also diejenige Oberfläche eines Dorns, welche durch Rotation eines Graphen einer Funktion um die Längsachse des Dorns entsteht.

Unter einer "Aussparung" wird jede Geometrieänderung verstanden, welche eine sonst zylindrische Dornmantelfläche abwandelt, sodass die Dornmantelfläche durch die Aussparung unterbrochen wird. Mit anderen Worten gesagt wird der vormals zylindrische Dorn an der Stelle der Aussparung durch die Aussparung vertieft.

Unter einem "Übergang" wird die Stelle auf der sonst zylindrischen Dornmantelfläche verstanden, an der die sonst zylindrische Dornmantelfläche in eine Aussparung übergeht. Mit anderen Worten gesagt beginnt am Übergang die Aussparung einer sonst zylindrischen Dornmantelfläche. Ist der Konturverlauf an der Stelle des Übergangs nicht differenzierbar, so handelt es sich um einen disharmonischen Übergang".

So ist konkret unter anderem denkbar, dass ein Dorn eine Aussparung aufweist, wobei die Aussparung eine harmonische Kontur aufweist, welche am Übergang disharmonisch in die sonst zylindrische Dornmantelfläche übergeht.

Vorteilhaft kann durch diesen Aspekt der Erfindung erreicht werden, dass eine Profilwellenverbindung auch bei hohen übertragenen Drehmomenten nur sehr geringe Kerbspannungen aufweist.

Weiterhin kann vorteilhaft durch diesen Aspekt der Erfindung erreicht werden, dass der Dorn einer Profilwellenverbindung ein besonders hohes Widerstandsmoment aufweist, welches ermöglicht, dass der notwendige Durchmesser einer Profilwellenverbindung reduziert werden kann.

Optional ist die Profilwellenverbindung zyklisch symmetrisch.

Vorteilhaft kann hierdurch erreicht werden, dass sich durch die zyklische Geometrie der Profilwellenverbindung mehrere unterschiedliche mögliche Montagewinkel zwischen einem Dorn und einem auf dem Dorn getragenen Segment ergeben, sodass insgesamt vielfältige Montageoptionen ermöglicht werden.

Bevorzugt entspricht die harmonische Kontur der Aussparung einem Teilstück einer Kontur einer Ellipse.

### Begrifflich sei hierzu Folgendes erläutert:

Unter einem "Teilstück" wird ein Segment einer Geometrie verstanden, welches insbesondere eine Aussparung bildet. Das Teilstück ist dabei ein beliebiges Teilstück einer Geometrie, welches einen Teil der ursprünglichen Umrandung der Geometrie beinhaltet. Dieser Teil der ursprünglichen Umrandung des Teilstücks einer Geometrie bildet die Kontur einer Aussparung ab. Eine Aussparung ist insbesondere ein Teilstück einer Ellipse, eines Kreises oder eines Polygons.

Vorteilhaft kann durch diesen Aspekt der Erfindung erreicht werden, dass eine Profilwellenverbindung auch bei hohen übertragenen Drehmomenten nur sehr geringe Kerbspannungen aufweist, wobei gleichermaßen die vergleichsweise flach verlaufende Aussparung des Dorns ein hohes Widerstandsmoment des Dorns ermöglicht, sodass eine Profilwellenverbindung einen geringeren notwendigen Durchmesser für die Profilwellenverbindung aufweist. Dadurch kann ermöglicht werden, dass Material eingespart werden kann und der im Wesentlichen durch den Dorn gebildete Schneckenkern einen optimal geringen Durchmesser aufweisen kann, sodass die Gangtiefe einer Schnecke bei gleichem äußeren Schneckendurchmesser erhöht werden kann.

Optional entspricht die harmonische Kontur der Aussparung einem Teilstück einer Kontur eines Kreises.

Vorteilhaft kann durch diesen Aspekt der Erfindung erreicht werden, dass eine Profilwellenverbindung auch bei hohen übertragenen Drehmomenten nur sehr geringe Kerbspannungen aufweist, wobei gleichermaßen die vergleichsweise flach verlaufende Aussparung des Dorns ein hohes Widerstandsmoment des Dorns ermöglicht, sodass eine Profilwellenverbindung einen geringeren notwendigen Durchmesser für die Profilwellenverbindung aufweist. Dadurch kann ermöglicht werden, dass Material eingespart werden kann und der im Wesentlichen durch den Dorn gebildete Schneckenkern einen optimal geringen Durchmesser aufweisen kann, sodass die Gangtiefe einer Schnecke bei gleichem äußeren Schneckendurchmesser erhöht werden kann.

Bevorzugt entspricht die harmonische Kontur der Aussparung einem Teilstück eines Polygons.

Vorteilhaft kann durch diesen Aspekt der Erfindung erreicht werden, dass eine Profilwellenverbindung auch bei hohen übertragenen Drehmomenten nur sehr geringe Kerbspannungen aufweist, wobei gleichermaßen die vergleichsweise flach verlaufende Aussparung des Dorns ein hohes Widerstandsmoment des Dorns ermöglicht, sodass eine Profilwellenverbindung einen geringeren notwendigen Durchmesser für die Profilwellenverbindung aufweist. Dadurch kann ermöglicht werden, dass Material eingespart werden kann und der im Wesentlichen durch den Dorn gebildete Schneckenkern einen optimal geringen Durchmesser aufweisen kann, sodass die Gangtiefe einer Schnecke bei gleichem äußeren Schneckendurchmesser erhöht werden kann.

Es sei ausdrücklich darauf hingewiesen, dass der Gegenstand des sechsten Aspekts mit dem Gegenstand der vorstehenden Aspekte der Erfindung vorteilhaft kombinierbar ist, und zwar einzeln oder in beliebiger Kombination kumulativ.

Optional weist der Dorn in der Nähe des Fußkreisdurchmessers einen Freistich auf.

Vorteilhaft kann bei geeigneter Gestaltung hierdurch erreicht werden, dass der Freistrich die Kerbwirkung am Zahnfuß des Dorns reduziert.

Optional weist das Segment in der Nähe des Fußkreises einen Freistich auf.

Vorteilhaft kann bei geeigneter Gestaltung hierdurch erreicht werden, dass der Freistrich die Kerbwirkung am Zahnfuß des Segments reduziert.

Bevorzugt weisen der Dorn und das Segment jeweils einen Kopfkreisdurchmesser und einen Fußkreisdurchmesser auf, wobei der Kopfkreisdurchmesser des Segmentes größer ist als der Fußkreisdurchmesser des Dorns.

Vorteilhaft kann hierdurch erreicht werden, dass Doppelpassungen vermieden werden und die Funktionalität der Zahnwellenverbindung gewährleistet werden kann.

Optional weisen der Dorn und das Segment jeweils einen Kopfkreisdurchmesser und einen Fußkreisdurchmesser auf, wobei der Fußkreisdurchmesser des Segmentes größer ist als der Kopfkreisdurchmesser des Dorns.

Vorteilhaft kann hierdurch erreicht werden, dass Doppelpassungen vermieden werden und die Funktionalität der Zahnwellenverbindung gewährleistet werden kann.

Bevorzugt ist die Profilwellenkontur des Segmentes radial höchstens um ein Hundertstel des Kopfkreisdurchmessers des Dorns größer, bevorzugt höchstens um ein Tausendstel.

Vorteilhaft kann hierdurch erreicht werden, dass Doppelpassungen vermieden werden und die Funktionalität der Zahnwellenverbindung gewährleistet werden kann.

Außerdem wird damit ein Schiebesitz zwischen Dorn und Segment erreicht, welcher eine einfache Montage und Demontage ermöglicht, gleichzeitig aber auch kein zu großes Spiel aufweist. Ein zu großes Spiel ist schädlich für die Funktionalität der Welle-Nabe-Verbindung.

Optional weist die Profilwellenkontur Kanten auf, wobei die Kanten abgerundet sind.

Vorteilhaft kann dadurch erreicht werden, dass an Kanten keine Überbelastung durch lokal zu große Flächenpressungen auftritt und somit die Funktionalität der Zahnwellenverbindung gewährleistet bleiben kann.

Außerdem können die abgerundeten Kanten das Verletzungsrisiko reduzieren.

Weiterhin können die abgerundeten Kanten dazu beitragen die Kerbwirkung zu reduzieren.

Nach einem siebten Aspekt der Erfindung löst die Aufgabe ein Extruder, in welchem eine hier vorgeschlagene Schnecke zum Einsatz kommt.

Es versteht sich, dass sich die Vorteile einer Schnecke wie vorstehend beschrieben unmittelbar auf einen Extruder erstrecken, insbesondere auf einen Einschneckenextruder oder einen Mehrschneckenextruder, der eine Schnecke wie vorstehend beschrieben aufweist.

Es sei ausdrücklich darauf hingewiesen, dass der Gegenstand des siebten Aspekts mit dem Gegenstand der vorstehenden Aspekte der Erfindung vorteilhaft kombinierbar ist, und zwar einzeln oder in beliebiger Kombination kumulativ.

Nachstehend wird die Erfindung anhand zweier Ausführungsbeispiele unter Bezugnahme auf die Zeichnung näher erläutert. Dort zeigen
- Fig. 1: schematisch in einem Schnitt eine Schnecke zum Einsatz in einem Extruder, wobei Schnecke eine formschlüssige zyklisch asymmetrische Profilwellenverbindung aufweist,
- Fig. 2: schematisch in einem Schnitt eine Schnecke zum Einsatz in einem Extruder, wobei die Schnecke eine formschlüssige Polygonwellenverbindung mit einer disharmonischen Polygonkontur mit konvex gekrümmten Polygonflanken aufweist,
- Fig. 3: schematisch in einem Schnitt eine Schnecke zum Einsatz in einem Extruder, wobei die Schnecke eine formschlüssige achsasymmetrische Zahnwellenverbindung mit einer disharmonischen Wellenkontur und einer harmonischen Zahnkontur aufweist, und
- Fig. 4: schematisch in einem Schnitt eine Schnecke zum Einsatz in einem Extruder, wobei die Schnecke eine Profilwellenverbindung mit einem Dorn mit konkaven Aussparungen mit einem harmonischem Verlauf der Kontur der Aussparung aufweist.

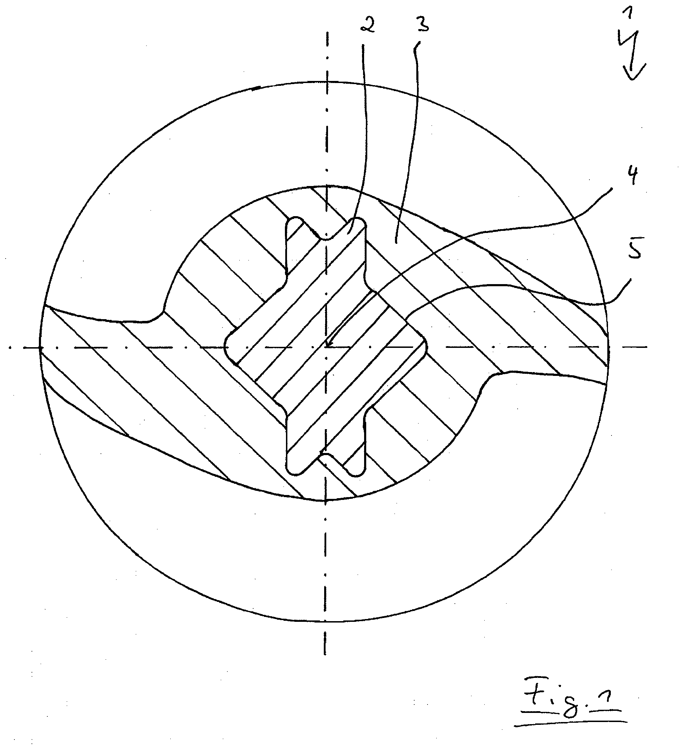

Die Extruderschnecke 1 in Figur 1 weist einen Dorn 2 und ein Segment 3 auf. Die Extruderschnecke kann zum Fördern, Kneten, Mischen oder Scheren eines Kunststoffs um eine Achse 4 rotieren.

Der Dorn 2 und das Segment 3 sind über eine formschlüssige lösbare Profilwellenverbindung miteinander verbunden, wobei das Segment 3 axial auf den Dorn 2 geschoben werden kann.

Die Profilwellenverbindung der Extruderschnecke 1 ist zyklisch asymmetrisch ausgeführt und weist ein Dornprofil 5 auf.

Die Extruderschnecke 1 hat eine Gangzahl von zwei. Die zyklisch asymmetrische Profilwellenverbindung ist so ausgeführt, dass das Segment 3 nicht in einem falschen Umfangswinkel auf den Dorn aufgeschoben werden kann, wodurch gewährleistet wird, dass die benachbarten Segmente nicht mit einem unpassenden Umfangswinkel zugeordnet werden können.

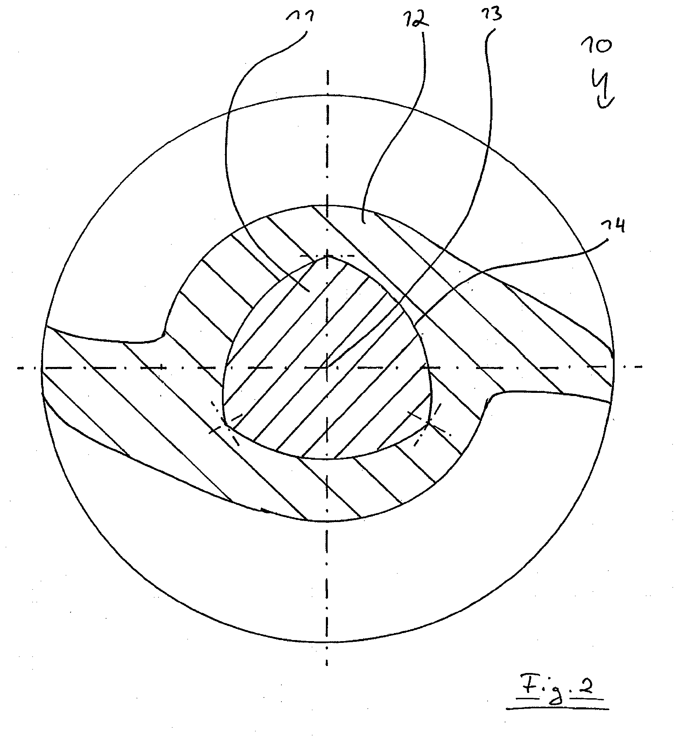

Die Extruderschnecke 10 in Figur 2 weist einen Dorn 11 und ein Segment 12 auf. Die Extruderschnecke 10 kann zum Fördern, Kneten, Mischen oder Scheren eines Kunststoffs um eine Achse 13 rotieren.

Der Dorn 11 und das Segment 12 sind über eine formschlüssige lösbare Polygonwellenverbindung miteinander verbunden, wobei das Segment 12 axial auf den Dorn 11 geschoben werden kann.

Die Polygonwellenverbindung der Extruderschnecke 10 ist zyklisch symmetrisch ausgeführt und weist ein disharmonisches Polygonprofil 14 mit konvex gekrümmten Flanken auf.

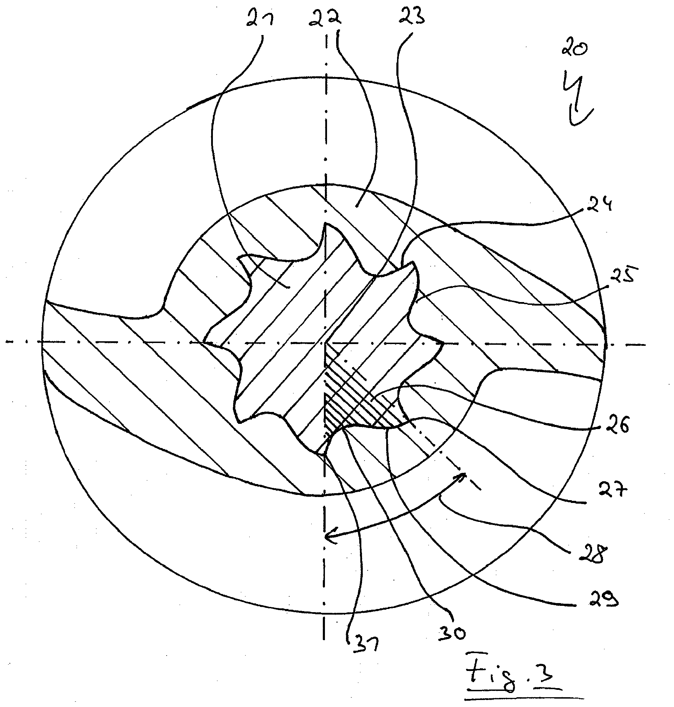

Die Extruderschnecke 20 in Figur 3 weist einen Dorn 21 und ein Segment 22 auf. Die Extruderschnecke 20 kann zum Fördern, Kneten, Mischen oder Scheren eines Kunststoffs um eine Achse 23 rotieren.

Dorn 21 und Segment 22 sind über eine formschlüssige achsasymmetrische lösbare Zahnwellenverbindung miteinander verbunden, wobei das Segment 22 axial auf den Dorn 21 geschoben werden kann.

Die Zahnwellenverbindung der Extruderschnecke 20 ist zyklisch symmetrisch mit einer Zahnteilung 28 ausgeführt und weist ein disharmonisches Profil der Zahnwellenverbindung auf.

Ein Zahnsegment 26 weist jeweils eine linke Zahnflanke 24 und eine rechte Zahnflanke 25 auf. Der Übergang von linker Zahnflanke 24 zu rechter Zahnflanke 25 ist am tiefsten Punkt 30 der Zahnkontur 29.

Die Zahnkontur 29 eines jeden zyklisch symmetrischen Zahnsegmentes 26 beginnt an einem linken Punkt 27, führt über die rechte Zahnflanke 25 zum tiefsten Punkt 30 und über die linken Zahnflanke 24 zum rechten Punkt 31.

Die linke Zahnflanke 24 und die rechte Zahnflanke 25 weisen eine gekrümmte Kontur auf.

Die linke Zahnflanke 24 und die rechte Zahnflanke 25 sind asymmetrisch ausgeführt.

Die linke Zahnflanke 24 weist eine steilere Zahnflankenkontur als die rechte Zahnflanke 25 auf.

Bevorzugt rotiert der Dorn in Richtung der steileren Zahnflanke. In diesem Ausführungsbeispiel ist dies in Richtung der linken Zahnflanke 24. Die bevorzugte Drehrichtung ist in diesem Ausführungsbeispiel also entgegengesetzt zum Uhrzeigersinn.

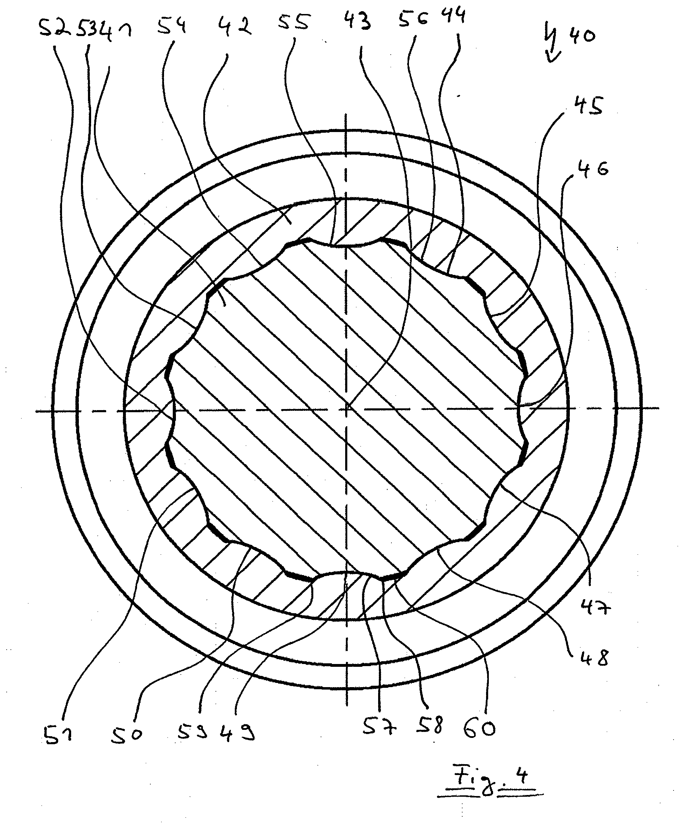

Die Extruderschnecke 40 in Figur 4 weist einen Dorn 41 und ein Segment 42 auf. Die Extruderschnecke 40 kann zum Fördern, Kneten, Mischen oder Scheren eines Kunststoffs um eine Achse 43 rotieren.

Der Dorn 41 und das Segment 42 sind über eine formschlüssige lösbare Profilwellenverbindung miteinander verbunden, wobei das Segment 42 axial auf den Dorn 41 geschoben werden kann.

Die Profilwellenverbindung der Extruderschnecke 40 ist zyklisch symmetrisch ausgeführt und weist zwölf Aussparungen 45, 46, 47, 48, 49, 50, 51, 52, 53, 54, 55, 56 auf.

Die Aussparungen 45, 46, 47, 48, 49, 50, 51, 52, 53, 54, 55, 56 weisen einen harmonischen konkaven Konturverlauf 57 mit einem disharmonischen Übergang zur sonst zylindrischen Dornmantelfläche 60 an den Übergängen 58, 59 auf.

### Liste der verwendeten Bezugszeichen

- 1: Extruderschnecke
- 2: Dorn
- 3: Segment
- 4: Achse
- 5: Dornprofil
- 10: Extruderschnecke
- 11: Dorn
- 12: Segment
- 13: Achse
- 14: Polygonprofil
- 20: Extruderschnecke
- 21: Dorn
- 22: Segment
- 23: Achse
- 24: linke Zahnflanke
- 25: rechte Zahnflanke
- 26: Zahnsegment
- 27: linker Punkt
- 28: Zahnteilung
- 29: Zahnkontur
- 30: tiefster Punkt
- 31: rechter Punkt
- 40: Extruderschnecke
- 41: Dorn
- 42: Segment
- 43: Achse
- 44: Dornprofil
- 45: Aussparung
- 46: Aussparung
- 47: Aussparung
- 48: Aussparung
- 49: Aussparung
- 50: Aussparung
- 51: Aussparung
- 52: Aussparung
- 53: Aussparung
- 54: Aussparung
- 55: Aussparung
- 56: Aussparung
- 57: Konturverlauf
- 58: Übergang
- 59: Übergang
- 60: Dornmantelfläche

## Patentansprüche

1. Schnecke zum Einsatz in einem Extruder, wobei die Schnecke einen Dorn und ein auf dem Dorn getragenes Segment aufweist,
***dadurch gekennzeichnet, dass***
das Segment und der Dorn eine zyklisch asymmetrische Profilwellenverbindung aufweisen.

2. Schnecke nach Anspruch 1, ***dadurch gekennzeichnet, dass*** die Profilwellenverbindung ein ganzzahliges Vielfaches an lokalen Maxima des Radius' der Verbindung zwischen Dorn und Schnecke gegenüber den zyklisch symmetrischen Schneckensegmenten aufweist.

3. Schnecke nach einem der Ansprüche 1 oder 2, wobei die Profilwellenverbindung eine Kontur mit zwei Profilflanken aufweist, wobei die Extruderschnecke eine konstruktionsbedingte Drehrichtung aufweist, ***dadurch gekennzeichnet, dass*** eine Profilflanke, insbesondere diejenige Profilflanke des Dorns, die dem Segment in Drehrichtung zugewandt ist, in radialer Richtung steiler ausgeführt ist als die andere Profilflanke.

4. Schnecke zum Einsatz in einem Extruder, wobei die Schnecke einen Dorn und ein auf dem Dorn getragenes Segment aufweist, wobei das Segment und der Dorn eine Profilwellenverbindung aufweisen,
***insbesondere*** Schnecke nach einem der vorstehenden Ansprüche,
***dadurch gekennzeichnet, dass***
die Profilwellenverbindung eine Polygonprofilwellenverbindung mit gekrümmten Flanken ist.

5. Schnecke nach Anspruch 4, ***dadurch gekennzeichnet, dass*** eine Flanke in Richtung des Segments konvex gekrümmt ist.

6. Schnecke nach einem der Ansprüche 4 oder 5, ***dadurch gekennzeichnet, dass*** eine Flanke in Richtung des Segments konkav gekrümmt ist.

7. Schnecke nach einem der Ansprüche 4 bis 6, wobei der Dorn eine Polygonkontur aufweist, ***dadurch gekennzeichnet, dass*** die Polygonkontur harmonisch ist.

8. Schnecke nach einem der Ansprüche 4 bis 6, wobei der Dorn eine Polygonkontur aufweist, ***dadurch gekennzeichnet, dass*** die Polygonkontur disharmonisch ist.

9. Schnecke zum Einsatz in einem Extruder, wobei die Schnecke einen Dorn und ein auf dem Dorn getragenes Segment aufweist, wobei das Segment und der Dorn eine Profilwellenverbindung aufweisen,
***insbesondere*** Schnecke nach einem der Ansprüche 1 bis 3,
***dadurch gekennzeichnet, dass***
die Profilwellenverbindung eine Keilwellenverbindung ist.

10. Schnecke zum Einsatz in einem Extruder, wobei die Schnecke einen Dorn und ein auf dem Dorn getragenes Segment aufweist, wobei das Segment und der Dorn eine Profilwellenverbindung aufweisen, wobei die Profilwellenverbindung in Form einer achsasymmetrischen Zahnwellenverbindung mit einem Zahn ausgeführt ist, wobei der Zahn eine rechte und eine linke Zahnflanke aufweist,
***insbesondere*** Schnecke nach einem der Ansprüche 1 bis 3,
***dadurch gekennzeichnet, dass***
die Zahnflanken eine Krümmung aufweisen.

11. Schnecke nach Anspruch 10, wobei ein Zahnsegment eine Zahnkontur aufweist,
***dadurch gekennzeichnet, dass*** die Zahnkontur harmonisch ist.

12. Schnecke nach Anspruch 10, wobei ein Zahnsegment eine Zahnkontur aufweist,
***dadurch gekennzeichnet, dass*** die Zahnkontur disharmonisch ist.

13. Schnecke zum Einsatz in einem Extruder, wobei die Schnecke einen Dorn und ein auf dem Dorn getragenes Segment aufweist, wobei das Segmente und der Dorn mit einer zyklisch symmetrischen Profilwellenverbindung verbunden sind, wobei die Profilwellenverbindung eine achsasymmetrische Zahnwellenverbindung ist, wobei eine Zahnteilung eine Zahnkontur aufweist,
***insbesondere*** Schnecke nach einem der vorstehenden Ansprüche,
***dadurch gekennzeichnet, dass***
die Zahnkontur des Dorns von einem Polynom fünften Grades konturnormal maximal um ein Hundertstel eines Kopfkreisdurchmessers des Dorns abweicht.

14. Schnecke nach Anspruch 13, ***dadurch gekennzeichnet, dass*** ein linker Punkt einer Zahnkontur durch das Polynom beschrieben wird, wobei der linke Punkt auf dem Kopfkreisdurchmesser des Dorns liegt und der linke Punkt an die linke Flanke eines ersten Zahnes angrenzt.

15. Schnecke nach einem der Ansprüche 13 oder 14, ***dadurch gekennzeichnet, dass*** ein rechter Punkt einer Zahnkontur durch das Polynom beschrieben wird, wobei der rechte Punkt auf dem Kopfkreisdurchmesser des Dorns liegt und der rechte Punkt an die linke Flanke eines zweiten Zahnes angrenzt.

16. Schnecke nach einem der Ansprüche 13 bis 15, ***dadurch gekennzeichnet, dass*** ein tiefster Punkt einer Zahnkontur durch das Polynom beschrieben wird, wobei der Punkt auf dem Fußkreisdurchmesser des Dorns liegt und der Punkt in einem Bereich zwischen 55 % bis 90 %, bevorzugt in einem Bereich zwischen 65 % und 83 % und besonders bevorzugt in einem Bereich zwischen 75 % und 79 %, in Umfangsrichtung auf einem Radius zwischen dem Radius des linken Punktes und dem Radius des rechten Punktes liegt.

17. Schnecke nach einem der Ansprüche 13 bis 16, ***dadurch gekennzeichnet, dass*** an dem linken Punkt die Steigung des Radius' in Umfangsrichtung in einem Bereich zwischen -0,1 und 0,1, bevorzugt zwischen -0,05 und 0,05 und besonders bevorzugt bei 0, liegt.

18. Schnecke nach einem der Ansprüche 13 bis 17, ***dadurch gekennzeichnet, dass*** an dem tiefsten Punkt die Steigung des Radius' in Umfangsrichtung bei 0 liegt.

19. Schnecke nach einem der Ansprüche 13 bis 18, ***dadurch gekennzeichnet, dass*** an dem rechten Punkt die Steigung des Radius' in Umfangsrichtung in einem Bereich zwischen 10 und ∞, bevorzugt in einem Bereich zwischen 100 und ∞ und besonders bevorzugt bei ∞, liegt.

20. Schnecke zum Einsatz in einem Extruder, wobei die Schnecke einen Dorn und ein auf dem Dorn getragenes Segment aufweist, wobei das Segment und der Dorn eine Profilwellenverbindung mit einer disharmonischen Kontur aufweisen,
***insbesondere*** Schnecke nach einem der vorstehenden Ansprüche,
***dadurch gekennzeichnet, dass***
die Profilwellenverbindung eine achsensymmetrische Kontur aufweist, wobei die Kontur des Dorns gegenüber einem sonst zylindrischen Verlauf einer Dornmantelfläche eine konkave Aussparung mit einem harmonischen Verlauf einer Kontur der Aussparung aufweist, wobei die harmonische Kontur der Aussparung durch einen disharmonischen Übergang am Kopfkreis des Dorns mit dem sonst zylindrischen Verlauf der Dornmantelfläche verbunden ist.

21. Schnecke nach Anspruch 20, ***dadurch gekennzeichnet, dass*** die Profilwellenverbindung zyklisch symmetrisch ist.

22. Schnecke nach einem der Ansprüche 20 oder 21, ***dadurch gekennzeichnet, dass*** die harmonische Kontur der Aussparung einem Teilstück einer Kontur einer Ellipse entspricht.

23. Schnecke nach einem der Ansprüche 20 bis 22, ***dadurch gekennzeichnet, dass*** die harmonische Kontur der Aussparung einem Teilstück einer Kontur eines Kreises entspricht.

24. Schnecke nach einem der Ansprüche 20 bis 23, ***dadurch gekennzeichnet, dass*** die harmonische Kontur der Aussparung einem Teilstück eines Polygons entspricht.

25. Schnecke nach einem der vorstehenden Ansprüche, ***dadurch gekennzeichnet, dass*** der Dorn in der Nähe des Fußkreisdurchmessers einen Freistich aufweist.

26. Schnecke nach einem der vorstehenden Ansprüche, ***dadurch gekennzeichnet, dass*** das Segment in der Nähe des Fußkreises einen Freistich aufweist.

27. Schnecke nach einem der vorstehenden Ansprüche, wobei der Dorn und das Segment jeweils einen Kopfkreisdurchmesser und einen Fußkreisdurchmesser auf*weisen, **dadurch gekennzeichnet, dass*** der Kopfkreisdurchmesser des Segmentes größer ist als der Fußkreisdurchmesser des Dorns.

28. Schnecke nach einem der vorstehenden Ansprüche, wobei der Dorn und das Segment jeweils einen Kopfkreisdurchmesser und einen Fußkreisdurchmesser aufweisen, ***dadurch gekennzeichnet, dass*** der Fußkreisdurchmesser des Segmentes größer ist als der Kopfkreisdurchmesser des Dorns.

29. Schnecke nach einem der vorstehenden Ansprüche, ***dadurch gekennzeichnet, dass*** die Profilwellenkontur des Segmentes radial höchstens um ein Hundertstel des Kopfkreisdurchmessers des Dorns größer ist, bevorzugt höchstens um ein Tausendstel.

30. Schnecke nach einem der vorstehenden Ansprüche, wobei die Profilwellenkontur Kanten aufweist, ***dadurch gekennzeichnet, dass*** die Kanten abgerundet sind.

31. Extruder mit einer Schnecke nach einem der vorstehenden Ansprüche.
